# EUROPEAN PATENT APPLICATION

(11) **EP 3 851 722 A1**
(43) Date of publication of application: **21.07.2021**
(21) Application number: 19861030.5
(22) Date of filing: 09.09.2019
(51) Int. Cl.: F16K 31/44, F15B 11/05

(54) **VALVE DEVICE**

(30) Priority: 13.09.2018 JP 2018171453
(71) Applicant: Kawasaki Jukogyo Kabushiki Kaisha, Hyogo 650-8670 (JP)
(72) Inventor: ITO, Noboru, Kobe-shi Hyogo 650-8670 (JP); MATSUO, Masahiro, Kobe-shi Hyogo 650-8670 (JP); ITOH, Hiroshi, Kobe-shi Hyogo 650-8670 (JP); YOSHIMOTO, Mitsuo, Kobe-shi Hyogo 650-8670 (JP)
(74) Representative: Dehns
(86) International application number: PCT/JP2019/035307
(87) International publication number: WO 2020/054643

(57) **Abstract**

There is provided a valve device capable of suppressing influence on the operation of a spool and securing seal performance of a sealing member. The valve device includes: a pilot chamber cover forming a pilot chamber to which pilot pressure is introduced, the pilot chamber cover including a through hole extending in a direction intersecting with an axial direction of the spool; an operating pin configured to swing in accordance with movement of the spool in the axial direction; a rotating shaft configured to turn in accordance with swinging of the operating pin; a coupling plug coupled to the rotating shaft, at least a part of the coupling plug being inserted into the through hole, the coupling plug being configured to switch between a coupled state where rotational force of the rotating shaft is transmitted to the coupling plug and a canceled state where the transmission of the rotational force of the rotating shaft to the coupling plug is canceled; an operating lever coupled to the coupling plug; and a sealing member provided between an inner peripheral surface of the through hole and the coupling plug.

## Description

### Technical Field

The present invention relates to a valve device configured to control the flow of an operating liquid supplied to a hydraulic device.

### Background Art

In hydraulic devices, such as cylinders and motors, the flow direction of an operating liquid is switched by a valve device. The valve device includes a spool which moves in its axial direction by the action of pilot pressure at normal time. At emergency time, the position of the spool is forcibly switched by tilting an operating lever (see PTL 1, for example).

In the valve device of PTL 1 (which is described as a direction switching valve in PTL 1), as shown in FIG. 6, a rotating shaft 201 is provided in a pilot chamber formed in a spool cover 202, and an operating pin 203 coupled to a spool 204 is fixed to the rotating shaft 201. Moreover, each of sealing members 205 is provided between a hole inner peripheral surface of the spool cover 202 and the rotating shaft 201.

### Citation List

### Patent Literature

PTL 1: Japanese Laid-Open Patent Application Publication No. 2009-185910

### Summary of Invention

### Technical Problem

In the valve device of PTL 1, an operating lever 200 is always being coupled to the rotating shaft 201. Therefore, the operating lever 200 is made to be tilted by the movement of the spool 204.

Since the rotating shaft 201 rotates at all times during the movement of the spool 204, the sealing members 205 slide on the hole inner peripheral surface of the spool cover 202. Therefore, contact resistance of the sealing members 205 influences the operation of the spool 204 in some cases. For example, in some cases, the rotating shaft (i.e., the spool) does not move in accordance with a command due to the contact resistance of the sealing members. Such deviation between a current command value with respect to an electromagnetic proportional valve and the flow rate (i.e., the movement distance of the spool) of a pilot liquid through the electromagnetic proportional valve is called hysteresis. Moreover, since the operating lever 200 is always being coupled to the spool 204 at normal time, the operating lever 200 becomes an interfering object which interferes the movement of the spool 204, and this further influences the operation of the spool 204 in some cases.

Furthermore, in the valve device of PTL 1, the rotating shaft 201 rotates each time the spool 204 moves as described above. Therefore, since the sealing members 205 highly frequently slide on the hole inner peripheral surface of the spool cover 202, seal performance needs to be secured.

An object of the present invention is to provide a valve device capable of suppressing influence on the operation of a spool and securing seal performance of a sealing member.

### Solution to Problem

A valve device of the present invention includes: a spool configured to move in an axial direction of the spool in accordance with pilot pressure; a housing main body accommodating the spool such that the spool is slidable; a pilot chamber cover adjacently provided at the housing main body and forming a pilot chamber to which the pilot pressure is introduced, the pilot chamber cover including a through hole extending in a direction intersecting with the axial direction of the spool; an operating pin provided in the pilot chamber and connected to the spool, the operating pin being configured to swing in accordance with movement of the spool in the axial direction; a rotating shaft provided in the pilot chamber and connected to the operating pin, the rotating shaft being configured to turn in accordance with swinging of the operating pin; a coupling plug coupled to the rotating shaft, at least a part of the coupling plug being inserted into the through hole of the pilot chamber cover, the coupling plug being configured to switch between a coupled state where rotational force of the rotating shaft is transmitted to the coupling plug and a canceled state where the transmission of the rotational force of the rotating shaft to the coupling plug is canceled; an operating lever coupled to the coupling plug; and a sealing member provided between an inner peripheral surface of the through hole of the pilot chamber cover and the coupling plug.

According to the present invention, at the time of normal operation, the coupling plug can be moved by the operating lever in the axial direction of the rotating shaft and therefore can be prevented from being coupled to the rotating shaft. On this account, the coupling plug does not turn in accordance with the turning of the rotating shaft at the time of the normal operation. Thus, the coupling plug does not slide on the sealing member. With this, influence on the operation of the spool from the contact resistance of the sealing member can be suppressed. For example, hysteresis between a current command value with respect to an electromagnetic proportional valve and a flow rate property of a pilot liquid can be reduced, the hysteresis being generated due to the contact resistance of the sealing member. Moreover, since the operating lever does not become an interfering object which interferes the movement of of the spool, the influence on the operation of the spool can be further suppressed. Furthermore, since the coupling plug is not coupled to the rotating shaft at normal time as described above, the sealing member does not slide on a hole inner peripheral surface of the pilot chamber cover. With this, the seal performance of the sealing member can be secured. It should be noted that at emergency time, the coupling plug can be moved by the operating lever in the axial direction of the rotating shaft and coupled to the rotating shaft, and therefore, the spool can be forcibly moved in the axial direction.

In the above invention, it is preferable that the coupling plug slide in the axial direction of the rotating shaft to switch between the coupled state and the canceled state.

According to the above configuration, the coupling of the coupling plug to the rotating shaft and the uncoupling of the coupling plug from the rotating shaft can be easily performed.

In the above invention, it is preferable that: the rotating shaft include a coupling pin projecting in a radial direction of the rotating shaft; and the coupling plug include a cutout portion provided at such a position that the cutout portion engages with the coupling pin with one end of the rotating shaft inserted into the coupling plug or at such a position that the cutout portion does not engage with the coupling pin.

According to the above configuration, the coupling of the coupling plug to the rotating shaft and the uncoupling of the coupling plug from the rotating shaft can be more easily performed.

In the above invention, it is preferable that: the valve device further include a first guide provided at a first side of the operating lever in the axial direction of the rotating shaft and a second guide provided at a second side of the operating lever in the axial direction of the rotating shaft; and the operating lever be configured to, when coupling the coupling plug to the rotating shaft, be tilted about the first guide serving as a fulcrum, and when uncoupling the coupling plug from the rotating shaft, be tilted about the second guide serving as the fulcrum.

According to the above configuration, the operating lever is easily tilted when coupling the coupling plug to the rotating shaft or uncoupling the coupling plug from the rotating shaft.

### Advantageous Effects of Invention

According to the present invention, the influence on the operation of the spool can be suppressed, and the seal performance of the sealing member can be secured.

### Brief Description of Drawings

FIG. 1 is a sectional view showing a valve device according to the present embodiment.
FIG. 2 is a sectional view showing a coupled state where a rotating shaft and a coupling plug are coupled to each other in a spool cover shown in FIG. 1.
FIG. 3 is a diagram showing a first guide which serves as a fulcrum when an operating lever is tilted.
FIG. 4A is a sectional view taken along line IV-IV of FIG. 2 at normal time. FIG. 4B is a sectional view taken along line IV-IV of FIG. 2 at emergency time.
FIG. 5 is a diagram showing a modified example of a configuration which realizes coupling between the coupling plug and the rotating shaft.

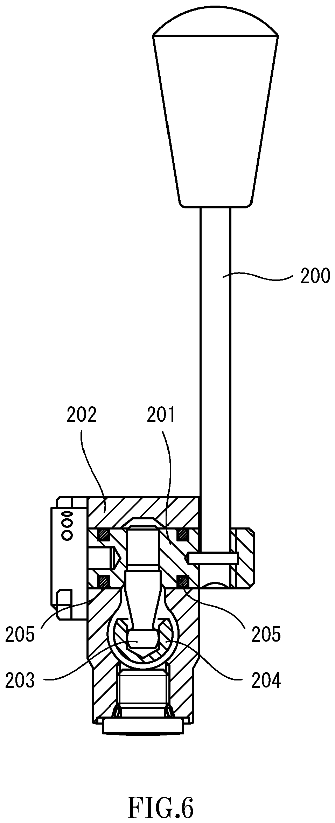

FIG. 6 is a diagram showing a configuration by which the spool is manually displaced in conventional cases.

### Description of Embodiments

Hereinafter, a valve device according to the present embodiment will be described with reference to the drawings. The valve device described below is just one embodiment. Therefore, the valve device is not limited to the following embodiment, and additions, eliminations, and modifications may be made within the scope of the present invention.

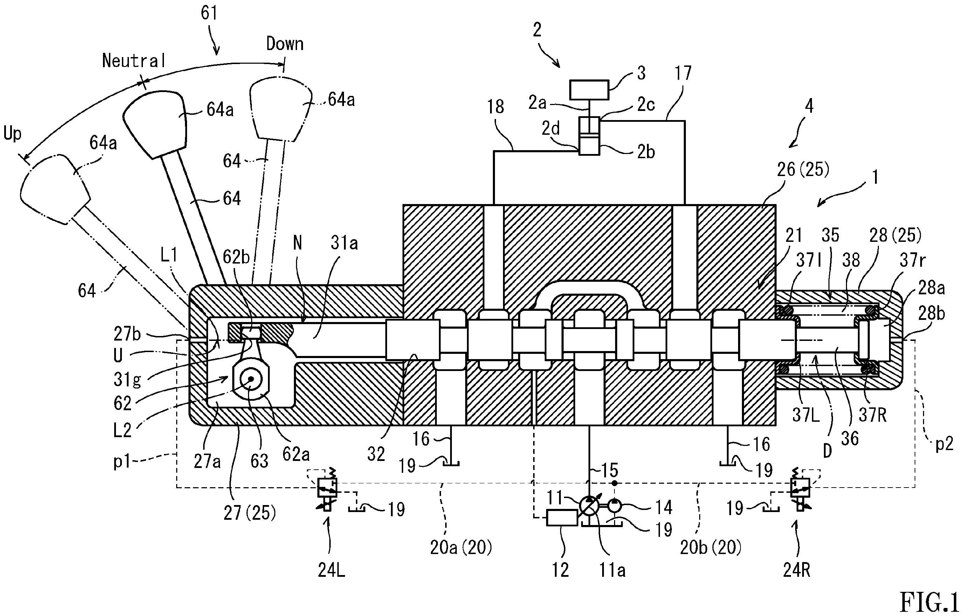

Operating machines, such as tractors, shovels, and forklifts, include apparatuses (such as spreaders), attachments (such as front loaders, booms, and forks), and the like (hereinafter referred to as "loads 3"). The operating machines perform various types of work by the loads 3. Moreover, the operating machines may lift or lower the loads 3 during the work. In order to lift or lower the load 3, as shown in FIG. 1, a valve device 1 of the present embodiment includes a cylinder 2 configured to operate by an operating liquid (oil or liquid, such as water).

Specifically, the cylinder 2 includes a rod 2a and a cylinder 2b. The rod 2a is inserted in the cylinder 2b so as to be able to reciprocate. The cylinder 2b includes a rod-side port 2c and a head-side port 2d. The rod 2a operates by supplying the operating liquid to or discharging the operating liquid form the rod-side port 2c or the head-side port 2d. To be specific, when the operating liquid is supplied to the rod-side port 2c and discharged from the head-side port 2d, the rod 2a contracts relative to the cylinder 2b. Moreover, when the operating liquid is supplied to the head-side port 2d and discharged from the rod-side port 2c, the rod 2a expands relative to the cylinder 2b. A hydraulic driving system 4 is connected to the cylinder 2 to supply the operating liquid to the cylinder 2.

The hydraulic driving system 4 includes a main pump 11, a tilt control portion 12, the valve device 1, and a pilot pump 14. For example, the main pump 11 is a variable displacement swash plate pump including a swash plate 11a. The tilt control portion 12 is provided at the main pump 11 to change a tilt angle of the swash plate 11a. The main pump 11 is coupled to a prime mover (not shown), such as an engine or an electric motor. The main pump 11 discharges the operating liquid at a flow rate corresponding to a rotational frequency of the prime mover and a discharge capacity of the prime mover. The discharged operating liquid is introduced from the main pump 11 through a pump passage 15 to the valve device 1.

The valve device 1 controls the flow of the operating liquid supplied to the cylinder 2 and includes a control valve 21. The control valve 21 mainly controls the flow of the operating liquid, discharged from the main pump 11, with respect to the cylinder 2. Specifically, the control valve 21 is mainly connected to the pump passage 15, a tank passage 16, a rod-side passage 17, and a head-side passage 18. The tank passage 16 is connected to a tank 19. The rod-side passage 17 and the head-side passage 18 are respectively connected to the rod-side port 2c and head-side port 2d of the cylinder 2. The control valve 21 includes a spool 31 to switch connection statuses of these four passages 15 to 18.

The spool 31 is formed in a substantially columnar shape. The spool 31 can move to three positions that are a neutral position N, an up position U, and a down position D. The connection statuses of the four passages 15 to 18 change depending on these positions. To be specific, when the spool 31 moves to the up position U, the pump passage 15 is connected to the head-side passage 18, and the rod-side passage 17 is connected to the tank passage 16. With this, the operating liquid is supplied to the head-side port 2d and discharged from the rod-side port 2c. Thus, the rod 2a expands, and the load 3 moves upward.

In contrast, when the spool 31 moves to the down position D, the pump passage 15 is connected to the rod-side passage 17, and the head-side passage 18 is connected to the tank passage 16. With this, the operating liquid is supplied to the rod-side port 2c and discharged from the head-side port 2d. Thus, the rod 2a contracts, and the load 3 moves downward. Moreover, when the spool 31 returns to the neutral position N, all the four passages 15 to 18 are disconnected. With this, the supply of the operating liquid to the cylinder 2 and the discharge of the operating liquid from the cylinder 2 can be stopped, and therefore, the upward and downward movements of the load 3 can be stopped.

The spool 31 receives pilot pressures p1 and p2 at both respective end portions thereof and moves to a position corresponding to the received pilot pressures p1 and p2. Specifically, when the spool 31 receives the first pilot pressure p1, the spool 31 moves to the down position D. Moreover, when the spool 31 receives the second pilot pressure p2, the spool 31 moves to the up position U. Furthermore, when the spool 31 does not receive any of the two pilot pressures p1 and p2, or when a pressure difference between these two pilot pressures p1 and p2 falls within a predetermined range, the spool 31 is held at the neutral position N.

For example, the pilot pump 14 is a fixed displacement pump (such as a swash plate pump or a gear pump) and is connected to a prime mover (not shown), such as an engine or an electric motor. The pilot pump 14 discharges a pilot liquid (which is the same as the operating liquid; such as oil or water) to a pilot passage 20 at a flow rate corresponding to the rotational frequency of the prime mover. The pilot passage 20 branches into two parts 20a and 20b at a portion thereof. The parts 20a and 20b are respectively connected to both end portions of the spool 31. A first electromagnetic control valve 24L is interposed on the part 20a that is one of the branched parts, and a second electromagnetic control valve 24R is interposed on the part 20b that is the other branched part. The first and second electromagnetic control valves 24L and 24R control the two pilot pressures p1 and p2 in accordance with a command from a control device (not shown) to adjust the position (stroke amount) of the spool 31.

As shown in FIG. 1, the valve device 1 includes a housing 25. The shape of the housing 25 is not especially limited as long as the spool 31 can slide on the housing 25. As shown in FIG. 1, the housing 25 may be configured to be dividable into a housing main body 26 and two covers 27 and 28. Or, the housing 25 may be configured to be divided into, for example, two parts in a depth direction on the paper surface of FIG. 1.

The housing main body 26 accommodates at least an intermediate portion of the spool 31. The housing main body 26 includes a through hole 32. The through hole 32 extends in a left-right direction on the paper surface of FIG. 1 so as to penetrate the housing main body 26.

The spool 31 is inserted into the through hole 32 such that: an axis L1 of the spool 31 coincides with an axis of the through hole 32; and the spool 31 is movable in an axial direction thereof. The spool 31 slides on an inner peripheral surface of the housing main body 26 in the axial direction.

First and second axial end portions of the spool 31 project outward from the housing main body 26. A spool cover (corresponding to a pilot chamber cover) 27 covering the first axial end portion of the spool 31 is adjacently provided at the housing main body 26. It should be noted that the housing main body 26 and the spool cover 27 may be provided integrally or separately. A spring cover 28 covering the second axial end portion of the spool 31 is provided at an opposite side of the spool cover 27.

The spool cover 27 forms therein a pilot chamber (first pilot chamber 27a). In the present embodiment, the spool cover 27 accommodates the first axial end portion (left end portion in FIG. 1) of the spool 31. To be specific, the first axial end portion of the spool 31 projects from the housing main body 26 to the first pilot chamber 27a. Moreover, the spool cover 27 includes a first pilot port 27b connected the first pilot chamber 27a. The first pilot port 27b is connected to the part 20a that is one of the branched parts of the pilot passage 20. To be specific, the first pilot pressure p1 output from the first electromagnetic control valve 24L is introduced through the first pilot port 27b to the first pilot chamber 27a.

On the other hand, the spring cover 28 is formed in a substantially cylindrical shape. The spring cover 28 is fixed to the housing main body 26 such that an opening thereof faces the housing main body 26. The spring cover 28 forms therein a second pilot chamber 28a. The second axial end portion of the spool 31 projects from the housing main body 26 to the second pilot chamber 28a. Moreover, the spring cover 28 includes a second pilot port 28b connected to the second pilot chamber 28a. The second pilot port 28b is connected to the part 20b that is the other branched part of the pilot passage 20. To be specific, the second pilot pressure p2 output from the second electromagnetic control valve 24R is introduced through the second pilot port 28b to the second pilot chamber 28a.

The second pilot chamber 28a accommodates a spring mechanism 35. In order to return the spool 31 to the neutral position N, the spring mechanism 35 includes a spacer bolt 36, a pair of spring seats 37L and 37R, and a return spring 38. The spacer bolt 36 is formed in a substantially columnar shape. A tip end portion of the spacer bolt 36 is threadedly engaged with the second axial end portion of the spool 31 such that an axis of the spacer bolt 36 and the axis of the spool 31 coincide with each other. The pair of spring seats 37L and 37R are externally attached to an intermediate portion of the spacer bolt 36.

The spring seat 37L includes a flange 371 extending at an opening end portion thereof over the entire periphery in a circumferential direction, and the spring seat 37R includes a flange 37r extending at an opening end portion thereof over the entire periphery in a circumferential direction. The return spring 38 is interposed between the flanges 371 and 37r. The return spring 38 is a compression coil spring and biases the spring seats 37L and 37R in directions opposite to each other.

The spring mechanism 35 is accommodated in the second pilot chamber 28a such that when the spool 31 is located at the neutral position N, the flange 371 contacts a second end surface of the housing main body 26, and the flange 37r contacts a bottom surface of the spring cover 28. According to this configuration, when the spool 31 moves to the down position D or the up position U, the return spring 38 applies biasing force to the spool 31 such that the spool 31 returns to the neutral position N.

As shown in FIG. 1, the valve device 1 includes a manual operation mechanism 61. By operating the manual operation mechanism 61, force can be applied to the spool 31 from outside. Thus, the spool 31 can be manually made to move in the axial direction. Hereinafter, details will be described.

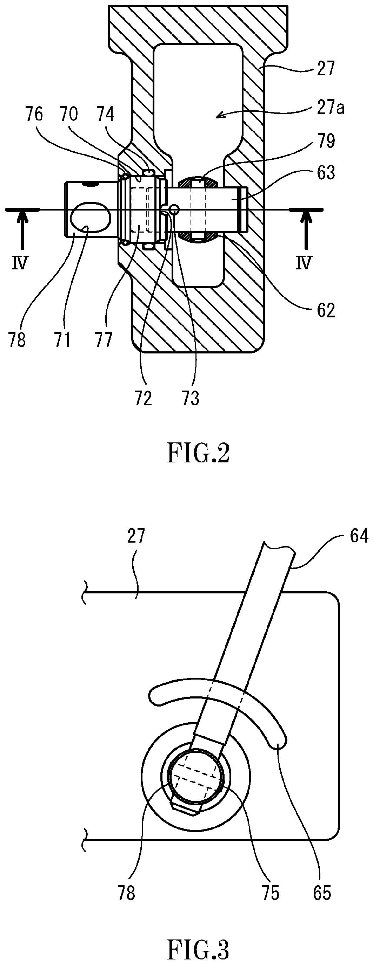

The manual operation mechanism 61 includes an operating pin 62 and an operating lever 64. The operating pin 62 is arranged in the first pilot chamber 27a of the spool cover 27. The operating pin 62 couples the operating lever 64 to the spool 31 and transmits rotational motion of the operating lever 64 to the spool 31. In the present embodiment, as one example, the operating pin 62 includes a turning portion 62a and a coupling portion 62b. The turning portion 62a is coupled to a below-described rotating shaft 63. Specifically, the turning portion 62a is formed in a substantially O shape. The rotating shaft 63 is fitted in an inner hole of the turning portion 62a. With this, the operating pin 62 is connected to the rotating shaft 63. It should be noted that the turning portion 62a and the rotating shaft 63 are fixed to each other by a fixing pin 79 (see FIG. 2).

Moreover, the operating pin 62 is connected to the spool 31. In the present embodiment, as one example, the coupling portion 62b is provided at the turning portion 62a. The coupling portion 62b extends from the turning portion 62a in a radial direction of the turning portion 62a. Furthermore, the spool 31 includes a spool pin 31a attached to the first axial end portion thereof with a fastener, such as a screw. The coupling portion 62b is coupled to the spool pin 31a. Specifically, the spool pin 31a includes an insertion hole 31g extending in a direction (upper-lower direction in FIG. 1) intersecting with (preferably, perpendicular to) the axis L1 and an axis L2 of the rotating shaft 63. A tip end portion of the coupling portion 62b is fitted in the insertion hole 31g. According to this configuration, the operating pin 62 is coupled to the spool 31. With this, the operating pin 62 swings in accordance with the movement of the spool 31 in the axial direction. It should be noted that the connection between the operating pin 62 and the spool 31 is not limited to this. For example, the coupling portion 62 and the spool 31 may be coupled to each other in such a manner that: the coupling portion 62b includes a hole; and the spool pin 31a is inserted and fitted in the hole. Or, the coupling portion 62b and the spool pin 31a may be coupled to each other with a fastener, such as a bolt.

The operating lever 64 manually moves the spool 31 in the axial direction at emergency time. To be specific, the operating lever 64 forcibly moves the spool 31. Specifically, the operating lever 64 can be tilted by manually operating a holding portion 64a provided at an upper end portion of the operating lever 64. Specifically, when the operating lever 64 is tilted and is made to fall down toward one side about the axis of the rotating shaft 63, the operating pin 62 turns counterclockwise in FIG. 1. In this case, the spool 31 is pulled by the operating pin 62 toward a left side in FIG. 1. In contrast, when the operating lever 64 is tilted and is made to raise toward the other side about the axis of the rotating shaft 63, the operating pin 62 turns clockwise in FIG. 1. In this case, the spool 31 is pushed by the operating pin 62 toward a right side in FIG. 1.

The rotating shaft 63 is provided in the first pilot chamber 27a and turns in accordance with the swinging of the operating pin 62. Specifically, the rotating shaft 63 is arranged in such a direction that the axis L2 intersects with (preferably, is perpendicular to) the axis L1 of the spool 31. In addition, the rotating shaft 63 is supported so as to be turnable about the axis L2. Specifically, as shown in FIG. 2, the rotating shaft 63 is turnably supported such that: one end portion thereof is inserted into a below-described coupling plug 77; and the other end portion thereof is inserted into a hole of a side wall (right side wall in FIG. 2) of the spool cover 27. Moreover, the rotating shaft 63 includes two coupling pins 73 projecting in a radial direction of the rotating shaft 63. One of the coupling pins 73 is arranged at a position symmetrical to the other coupling pin 73 across a center axis of the rotating shaft 63.

As shown in FIG. 2, the coupling plug 77 is inserted into a through hole 70 which is provided at the spool cover 27 and extends in a direction intersecting with (preferably, perpendicular to) the axial direction of the spool 31. In the present embodiment, as one example, the through hole 70 is provided at a side wall (left side wall in FIG. 2) of the spool cover 27.

The coupling plug 77 is coupled to the operating lever 64. In the present embodiment, as one example, the coupling plug 77 is provided with a lever connecting member 78 which is formed in a substantially cylindrical shape and includes an elongated hole 71 penetrating an outer peripheral wall thereof in the radial direction. As shown in FIG. 3, the operating lever 64 is tiltably attached to the lever connecting member 78 by a pin 75 with one end portion thereof inserted into the elongated hole 71 of the lever connecting member 78. According to this configuration, the operating lever 64 can be tilted about the axis of the rotating shaft 63 as described above, and in addition, can be tilted toward both sides in the axial direction of the rotating shaft 63. It should be noted that a C ring 76 configured to prevent the coupling plug 77 from coming out is provided between an inner peripheral surface of the through hole 70 of the spool cover 27 and the coupling plug 77.

A sealing member 74 is provided between an outer peripheral surface of the coupling plug 77 and the inner peripheral surface of the through hole 70 of the spool cover 27. In the present embodiment, as one example, the sealing member 74 is provided so as to be fitted in an annular groove formed on a hole peripheral wall of the spool cover 27. The sealing member 74 prevents the operating oil in the first pilot chamber 27a from leaking to an outside.

The coupling plug 77 can switch between a coupled state where the coupling plug 77 is coupled to the rotating shaft 63, and therefore, rotational force of the rotating shaft 63 is transmitted to the coupling plug 77 and a canceled state (hereinafter referred to as an uncoupled state) where the transmission of the rotational force from the rotating shaft 63 is canceled. In the uncoupled state, the coupling plug 77 is not coupled to the rotating shaft 63. Therefore, even when the rotating shaft 63 rotates, the coupling plug 77 does not turn in accordance with the rotation of the rotating shaft 63. On the other hand, the coupled state is formed only at emergency time, i.e., when the spool 31 is forcibly moved in the axial direction by the operating lever 64 with the coupling plug 77 coupled to the rotating shaft 63. To be specific, the uncoupled state is a state where the coupling plug 77 turns only at emergency time.

In the present embodiment, the coupling plug 77 slides in the axial direction of the rotating shaft 63 to switch between the coupled state where the coupling plug 77 and the rotating shaft 63 are coupled to each other and the uncoupled state where the coupling plug 77 and the rotating shaft 63 are uncoupled from each other. The coupling plug 77 is configured to slide toward a first side or a second side in the axial direction of the rotating shaft 63. In the present embodiment, when the coupling plug 77 slides toward the rotating shaft 63, the coupling plug 77 is coupled to the rotating shaft 63, and the coupling plug 77 and the rotating shaft 63 integrally turns. In the present embodiment, as one example of a coupler by which the coupling plug 77 and the rotating shaft 63 are coupled to each other, the coupling plug 77 includes cutout portions (notch portions) 72 each provided at such a position that the cutout portion 72 engages with the corresponding coupling pin 73 with one end of the rotating shaft 63 inserted into the coupling plug 77 or at such a position that the cutout portion 72 does not engage with the corresponding coupling pin 73. The cutout portions 72 are formed on a peripheral wall of the coupling plug 77.

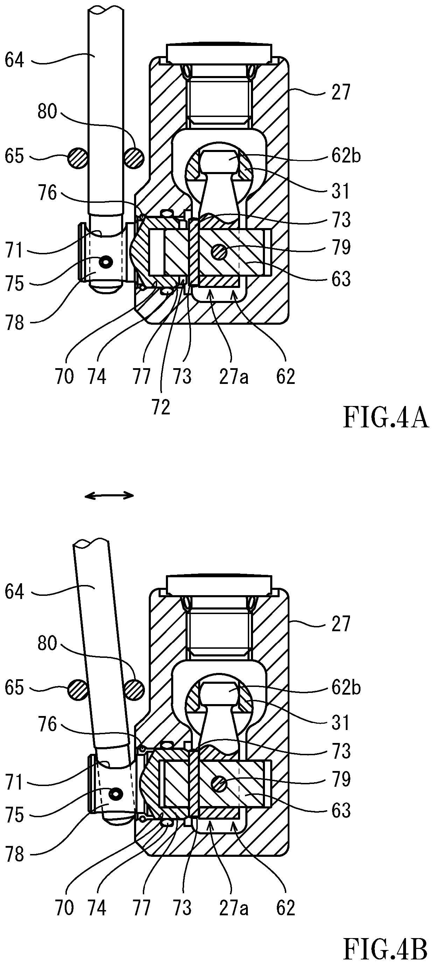

As shown in FIGS. 3, 4A, and 4B, a first guide 65 is provided at the first side of the operating lever 64 in the axial direction of the rotating shaft 63. The first guide 65 is formed to have a circular section and is supported by a supporting member (not shown). Moreover, the first guide 65 is formed in a circular-arc shape. As shown in FIGS. 4A and 4B, a second guide 80 is provided at the second side of the operating lever 64 in the axial direction of the rotating shaft 63. The second guide 80 is formed to have a circular section and is supported by a supporting member (not shown). Moreover, as with the first guide 65, the second guide 80 is formed in a circular-arc shape.

In the above configuration, at emergency time caused due to malfunction of the electromagnetic proportional valve 24L or 24R, sticking of the spool 31, or the like, as shown in FIG. 4B, the operating lever 64 is tilted from a normal state shown in FIG. 4A to the left side in the axial direction of the rotating shaft 63 about the first guide 65 serving as a fulcrum. With this, the coupling plug 77 moves to the right side, and the cutout portions 72 engage with the coupling pins 73 of the rotating shaft 63. Thus, the coupling plug 77 and the rotating shaft 63 are coupled to each other. In this state, when the operating lever 64 is tilted about the axis of the rotating shaft 63, the coupling plug 77 turns about the axis of the rotating shaft 63. With this, the spool 31 can be moved in the axial direction, and the position of the spool 31 can be changed.

On the other hand, when disengaging the cutout portions 72 from the coupling pins 73 at normal time, the operating lever 64 is tilted to the right side in the axial direction of the rotating shaft 63 about the second guide 80 serving as a fulcrum. With this, the coupling plug 77 moves to the left side, and the cutout portions 72 are disengaged from the coupling pins 73. When the cutout portions 72 do not engage with the coupling pin 73, the rotating shaft 63 turns independently from the coupling plug 77.

As described above, according to the valve device 1 of the present embodiment, at the time of normal operation, the coupling plug 77 can be moved by the operating lever 64 in the axial direction of the rotating shaft 63 and therefore can be prevented from being coupled to the rotating shaft 63. On this account, the coupling plug 77 does not turn in accordance with the turning of the rotating shaft 63 at the time of the normal operation. Thus, the coupling plug 77 does not slide on the sealing member 74. With this, influence on the operation of the spool 31 from the contact resistance of the sealing member 74 can be suppressed. For example, the hysteresis generated due to the contact resistance of the sealing member 74 can be reduced. Moreover, since the coupling plug 77 and the rotating shaft 63 are not coupled to each other at normal time, the operating lever 64 does not become an interfering object which interferes the movement of the spool 31. Therefore, the influence on the operation of the spool 31 can be further suppressed. Furthermore, as described above, since the coupling plug 77 is not coupled to the rotating shaft 63 at normal time, the sealing member 74 does not slide on a hole inner peripheral surface of the spool cover 27. With this, seal performance of the sealing member 74 can be secured.

At emergency time (when manually moving the position of the spool 31), the operating lever 64 is tilted to the first side (left side in FIG. 4B) in the axial direction of the rotating shaft 63. With this, the coupling plug 77 can be moved in such a direction (to the right side in FIG. 4B) as to approach the rotating shaft 63 and can be coupled to the rotating shaft 63. Thus, the position of the spool 31 can be forcibly moved by tilting the operating lever 64 about the axis of the rotating shaft 63.

### Other Embodiments

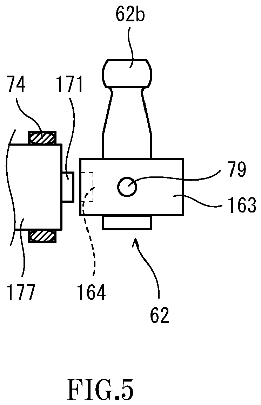

The coupling plug and the rotating shaft may be coupled to each other by the following configuration. FIG. 5 is a diagram showing a modified example of the configuration which realizes the coupling between the coupling plug and the rotating shaft. It should be noted that in FIG. 5, the same reference signs are used for the same members as in the above embodiment, and the repetition of the same explanation is avoided.

As shown in FIG. 5, a coupling plug 177 is formed in a substantially columnar shape. One or a plurality of projections 171 each having, for example, a rectangular shape in a side view (i.e., when viewed from a first side in an axial direction of a rotating shaft 163) are formed on an end surface, located close to the rotating shaft 163, of the coupling plug 177. On the other hand, one or a plurality of recesses 164 each having, for example, a rectangular shape in the side view are formed on an end surface, located close to the coupling plug 177, of the rotating shaft 163 so as to correspond to the one or the plurality of projections 171. According to this configuration, at emergency time, the coupling plug 177 can be moved to the right side in FIG. 5, and the projection(s) 171 can be engaged with the recess(es) 164 of the rotating shaft 163. The coupling between the coupling plug 177 and the rotating shaft 163 can be realized by this configuration.

Moreover, the following modified example is applicable to the valve device 1. In the above embodiments, the coupling plug 77 and the rotating shaft 63 are coupled to each other by the engagement of the coupling pins 73 with the cutout portions 72, or the coupling plug 177 and the rotating shaft 163 are coupled to each other by the engagement of the projection(s) 171 with the recess(es) 164. However, the above embodiments are not limited to these. Other coupling methods may be used as long as when the coupling plug turns about the axis of the rotating shaft, the rotating shaft surely turns in accordance with the turning of the coupling plug. For example, the coupling method may be such that: the coupling plug and the rotating shaft are provided with gears; and the coupling plug and the rotating shaft are coupled to each other by meshing of these gears.

Moreover, in the above embodiment, each of the first guide 65 and the second guide 80 is formed in a circular-arc shape. However, the above embodiment is not limited to this. Each of the first guide 65 and the second guide 80 is only required to be configured such that when the operating lever 64 is tilted about the axis of the rotating shaft 63, each of the first guide 65 and the second guide 80 contacts the operating lever 64 to serve as the fulcrum of this tilting.

Moreover, in the above embodiment, two cutout portions 72 are provided so as to correspond to the number of coupling pins 73. However, the above embodiment is not limited to this. Each of the number of coupling pins 73 and the number of cutout portions 72 corresponding to the number of coupling pins 73 may be one or three or more.

Moreover, in the above embodiment, the operating pin 62 and the spool 31 are coupled to each other in such a manner that the coupling portion 62b of the operating pin 62 is fitted in the insertion hole 31g of the spool pin 31a. However, the above embodiment is not limited to this. For example, the operating pin 62 and the spool 31 may be coupled to each other in such a manner that: a rack is provided at the spool pin 31a; and a pinion is provided at an upper end portion of the operating pin 62.

Moreover, in the above embodiment, the valve device 1 is applied to the cylinder 2. However, the above embodiment is not limited to this. The valve device 1 may be applied to other hydraulic devices, such as motors.

Moreover, in the above embodiment, the valve device 1 is a three-position (neutral position, up position, down position) switching valve. However, the above embodiment is not limited to this. The above embodiment is applicable to a two-position switching valve. Furthermore, at least a part of the coupling plug 77 is only required to be inserted into the through hole 70 of the spool cover 27.

Moreover, the valve device 1 of the above embodiment is mainly applied to operating machines. However, the above embodiment is not necessarily limited to such machines. For example, the valve device 1 of the above embodiment may be applied to robots including hydraulic cylinders, excavators, aerial work platform vehicles, and the like. The field to which the valve device 1 of the above embodiment is applied is not limited. Furthermore, the cylinder 2 is not necessarily have to lift or lower the load and may be configured to move the load in a horizontal direction.

### Reference Signs List

- 1: valve device
- 21: control valve
- 26: housing main body (housing)
- 27: spool cover (pilot chamber cover)
- 27a: first pilot chamber (pilot chamber)
- 31: spool
- 32: through hole
- 62: operating pin
- 63, 163: rotating shaft
- 64: operating lever
- 65: first guide
- 70: through hole
- 72: cutout portion
- 73: coupling pin
- 74: sealing member
- 77, 177: coupling plug
- 80: second guide

## Claims

1. A valve device comprising:
a spool configured to move in an axial direction of the spool in accordance with pilot pressure;
a housing main body accommodating the spool such that the spool is slidable;
a pilot chamber cover adjacently provided at the housing main body and forming a pilot chamber to which the pilot pressure is introduced, the pilot chamber cover including a through hole extending in a direction intersecting with the axial direction of the spool;
an operating pin provided in the pilot chamber and connected to the spool, the operating pin being configured to swing in accordance with movement of the spool in the axial direction;
a rotating shaft provided in the pilot chamber and connected to the operating pin, the rotating shaft being configured to turn in accordance with swinging of the operating pin;
a coupling plug coupled to the rotating shaft, at least a part of the coupling plug being inserted into the through hole of the pilot chamber cover, the coupling plug being configured to switch between a coupled state where rotational force of the rotating shaft is transmitted to the coupling plug and a canceled state where the transmission of the rotational force of the rotating shaft to the coupling plug is canceled;
an operating lever coupled to the coupling plug; and
a sealing member provided between an inner peripheral surface of the through hole of the pilot chamber cover and the coupling plug.

2. The valve device according to claim 1, wherein the coupling plug slides in the axial direction of the rotating shaft to switch between the coupled state and the canceled state.

3. The valve device according to claim 2, wherein:
the rotating shaft includes a coupling pin projecting in a radial direction of the rotating shaft; and
the coupling plug includes a cutout portion provided at such a position that the cutout portion engages with the coupling pin with one end of the rotating shaft inserted into the coupling plug or at such a position that the cutout portion does not engage with the coupling pin.

4. The valve device according to any one of claims 1 to 3, further comprising:
a first guide provided at a first side of the operating lever in the axial direction of the rotating shaft; and
a second guide provided at a second side of the operating lever in the axial direction of the rotating shaft, wherein
the operating lever is configured to: when coupling the coupling plug to the rotating shaft, be tilted about the first guide serving as a fulcrum; and when uncoupling the coupling plug from the rotating shaft, be tilted about the second guide serving as the fulcrum.
